Europäisches Patentamt

European Patent Office

Office européen des brevets

(19)

(11) Veröffentlichungsnummer : **0 346 325 B1**

# (12) EUROPÄISCHE PATENTSCHRIFT

(45) Veröffentlichungstag der Patentschrift :
**15.01.92 Patentblatt 92/03**

(51) Int. Cl.⁵ : **G01C 17/38**

(21) Anmeldenummer : **87906807.0**

(22) Anmeldetag : **22.10.87**

(86) Internationale Anmeldenummer :
**PCT/DE87/00477**

(87) Internationale Veröffentlichungsnummer :
**WO 88/05153 14.07.88 Gazette 88/15**

---

(54) **NAVIGATIONSVERFAHREN FÜR FAHRZEUGE MIT ELEKTRONISCHEN KOMPASS.**

---

(30) Priorität : **30.12.86 DE 3644681**

(43) Veröffentlichungstag der Anmeldung :
**20.12.89 Patentblatt 89/51**

(45) Bekanntmachung des Hinweises auf die
Patenterteilung :
**15.01.92 Patentblatt 92/03**

(84) Benannte Vertragsstaaten :
**DE FR GB IT SE**

(56) Entgegenhaltungen :
**EP-A- 0 145 950**
**WO-A-86/05584**
**GB-A- 2 141 551**

(73) Patentinhaber : **ROBERT BOSCH GMBH**
**Postfach 50**
**W-7000 Stuttgart 1 (DE)**

(72) Erfinder : **HELLDÖRFER, Reinhard**
**Rosenstrasse 9**
**W-8523 Igelsdorf (DE)**
Erfinder : **KANZLER, Ulrich**
**Heuweg 3**
**W-8504 Stein (DE)**
Erfinder : **RAUCH, Hans**
**Distelweg 11**
**W-8510 Fürth (DE)**

## Beschreibung

Die Erfindung geht aus von einem Verfahren zur Ermittlung der Richtung des Erdmagnetfeldes, der Nordrichtung bzw. der Fahrrichtung eines Fahrzeugs nach der Gattung des Hauptanspruchs.

Aus der DE-OS 35 09 548 ist ein Verfahren zur Ermittlung der Fahrrichtung eines Fahrzeugs mit einem elektronischen Kompass bekannt, bei dem mit einem im Fahrzeug fest angeordneten Magnetometer das dort wirksame Magnetfeld gemessen und in Form einer elliptischen Ortskurve in einer Auswerteschaltung abgespeichert und zur Berechnung der Erdfeldrichtung bezogen auf die Fahrrichtung verarbeitet wird. Mit einer Eich-fahrt werden als Parameter der elliptischen Ortskurve des Magnetfeldes die Verschiebung der Ortskurve aus dem Koordinatenursprung, die Drehung sowie die kleine und die große Halbachse der elliptischen Ortskurve ermittelt. Ferner ist dort bekannt, bei einer Abweichung des zyklisch gemessenen Magnetfeldes von der elliptischen Ortskurve um einen vorgebbaren Betrag eine Nacheichung der Ortskurve sogleich oder bei mehrfach wiederholter Abweichung vorzunehmen.

Eine solche dynamische Nacheichung zur Kompensation von Störfeldänderungen im Kraftfahrzeug muß jedoch so geführt sein, daß kurzzeitig auftretende Störfelder oder Störfeldänderungen gegebenenfalls unterdrückt werden, wogegen länger andauernde oder langsame Störfeldänderungen im Fahrzeug zu kompensieren sind. Dabei ist zu berücksichtigen, daß die im Fahrzeug vorhandenen Störfelder sich zeitabhängig ändern können und daß die Feldstärke des Erdmagnetfeldes starken Schwankungen unterliegt, die im wesentlichen ortsabhängig sind. Daraus ergibt sich bei den Störfeldern ein richtungsunabhängiger Störfeldvektor als hartmagnetischer Anteil, der insbesondere durch im Fahrzeug fließende elektrische Ströme verändert wird. Das Zu- und Abschalten einzelner Verbraucher ruft sprunghafte Magnetfeldstörungen hervor. Dadurch können Ummagnetisierungen im Fahrzeugblech verursacht werden, welche relativ langsame Änderungen des richtungsunabhängigen Störfeldvektors nach Tagen oder Wochen zur Folge haben. Der richtungsabhängige Störfeldvektor als weichmagnetischer Anteil des Störfeldes im Fahrzeug verändert sich sowohl durch die Intensitätsänderung des Erdfeldes bei Fahrten in Nord-Süd-Richtung als auch bei einer Ummagnetisierung im Fahrzeugblech. Auch dies sind relativ langsame Störfeldänderungen.

Mit der vorliegenden Erfindung wird angestrebt, diese langfristig wirksamen Störfeldänderungen nur schrittweise bei der Nacheichung zu berücksichtigen.

## Vorteile der Erfindung

Das erfindungsgemäße Verfahren mit den Merkmalen des Anspruchs 1 hat den Vorteil, daß eine zyklisch ermittelte Störfeldänderung im bezug auf die elliptische Ortskurve mit einem Faktor kleiner 1 derart gewichtet werden kann, daß kurzzeitige Änderungen des Magnetfeldes am Magnetometer praktisch unwirksam bleiben. Dadurch lassen sich Anormalien oder Störungen bei der Ermittlung des Erdfeldes, beispielsweise bei der Durchfahrt von Tunneln, Brücken und dgl. relativ gut unterdrücken. Als weiterer Vorteil ist anzusehen, daß die Nachführung des richtungsunabhängigen Störfeldvektors unabhängig von der Nachführung des richtungsabhängigen Störfeldvektors durchzuführen und damit die Nacheichung weiter zu verbessern ist.

Durch die in den abhängigen Ansprüchen aufgeführten Maßnahmen sind vorteilhafte Weiterbildungen und Verbesserungen der im Anspruch 1 angegebenen Merkmale möglich. Dabei ist es für die Wichtung von Störfeldänderungen besonders vorteilhaft, wenn der Faktor k für die Richtung der Störfeldänderung abhängig von der Zykluszeit der Meßwerterfassung so gewählt ist, daß kurzzeitig über wenige Sekunden auftretende Störfeldänderungen nahezu unterdrückt werden. Durch Zu- oder Abschalten von Verbrauchern im Kraftfahrzeug über mehrere Minuten sollen dagegen durch den Wichtungsfaktor k zeitlich länger aufretende Störfeldänderungen voll nachgeführt werden. Zur dynamischen Kompensation der weichmagnetischen Störfeldänderungen im Kraftfahrzeug ist es sehr vorteilhaft, in der Auswerteschaltung einen Datenpuffer in eine bestimmte Anzahl von Plätzen aufzugliedern, die einer gleichen Anzahl von gleichgroßen Winkelsegmenten der elliptischen Ortskurve zugeordnet werden und in die zyklisch erfaßte Meßwerte des Magnetometers an den ihren Winkelsegmenten entsprechenden Plätzen des Datenpuffers unmittelbar oder gemittelt abgelegt werden. Sobald eine ausreichende, vorbestimmte Anzahl von Meßwerten im Datenpuffer gespeichert ist, werden aus diesen Meßwerten die Parameter für die elliptische Ortskurve in bekannter Weise, z.B. nach der DE-OS 35 09 548 neu errechnet. Die bisherigen Parameter werden dann durch Mittelung mit den neu errechneten Werten korrigiert und gespeichert.

Eine höhere Genauigkeit bei der Berechnung der neuen Parameter der elliptischen Ortskurve ergibt sich in vorteilhafter Weise dann, wenn mehrere Meßwerte für jeden quadranten der elliptischen Ortskurve im Datenpuffer abgelegt sind.

Zeichnung

Ein Ausführungsbeispiel der Erfindung ist in der Zeichnung dargestellt und in der nachfolgenden Beschreibung näher erläutert. Es zeigen Figur 1 ein Navigationssystem für ein Kraftfahrzeug im Blockschaltbild, Figur 2 die elliptische Ortskurve des am Magnetometer des Navigationssystems wirksamen Magnetfeldes und Figur 3 zeigt einen Datenpuffer zur Abspeicherung der zyklisch erfaßten Meßwerte des Magnetometers für ein dynamisches Nachkalibrieren.

Beschreibung des Ausführungsbeispieles

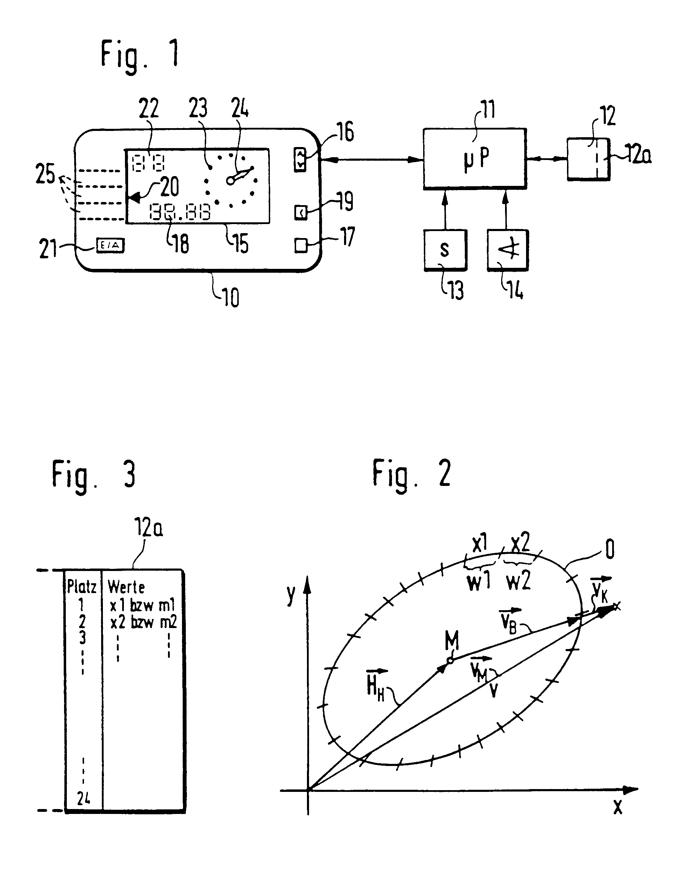

In Figur 1 ist ein Koppelnavigationssystem für Fahrzeuge dargestellt, mit dem der Fahrer durch Angabe von Zielrichtung und Luftlinienentfernung in einer fremden Umgebung das gewünschte Ziel finden kann (Zielfindungssystem). Es besteht aus einer Ein- und Ausgabeeinheit 10, einem Mikroprozessor 11 mit einem Datenspeicher 12 sowie aus einem Weggeber 13 und einem Fahrrichtungsgeber 14. Der Mikroprozessor 11 ist üblicherweise zusammen mit dem Datenspeicher 12 in der Ein- und Ausgabeeinheit 10 mit enthalten. Als Weggeber 13 können Impulsgeber eines Tachogenerators oder entsprechende Geber an den Fahrzeugrädern verwendet werden, die gegebenenfalls bereits im Fahrzeug vorhanden sind, beispielsweise für einen Fahrdatenrechner oder für ein Antiblockiersystem. Als Fahrrichtungsgeber ist ein Magnetometer bzw. ein Magnetfeldmesser zu verwenden. Der Mikroprozessor verarbeitet die vom Weggeber 13 und vom Magnetometer 14 abgegebenen Signale und er führt die von den Bedientasten der Einheit 10 ausgelösten Steuer- und Eingabebefehle aus. Ferner steuert er die Ausgabe von Daten und Richtungspfeilen auf einer Flüssigkristallanzeige 15 der Einheit 10. Mit einer Wipptaste 16 können Zahlenwerte in Richtung größer und kleiner auf der LCD 15 verändert werden. Mit der Betätigung einer Quittiertaste 17 wird jeweils der auf der LCD 15 angezeigte aktuelle Zahlenwert abgespeichert und im unteren Bereich der LCD 15 auf einer Anzeige 18 ausgegeben. Mit einer Funktionswahltaste 19 erfolgt die Umschaltung des Navigationssystems innerhalb eines angebotenen Menüs gemäß einer Beschriftung 25 auf dem linken Randbereich der Einheit 10, wobei die jeweils auf der LCD 15 angezeigten Informationen durch einen Pfeil 20 auf der LCD 15 in Höhe der Beschriftung 25 kenntlich gemacht werden. Ein weiterer Tastschalter 21 dient zum Ein- und Ausschalten des Koppelnavigationssystems. Eine 7-Segment-Anzeige 22 im oberen LCD-Bereich dient zur Kennzeichnung von 99 verschiedenen Zielvorgaben. Eine Rosette 23 der LCD 15 mit sechzehn verschiedenen unsichtbaren Pfeilsegmenten dient zur Richtungsinformation, wobei der angesteuerte Richtungspfeil 24 entweder die Nordrichtung oder die Richtung des anzufahrenden Zieles darstellt.

Das im Fahrzeug fest angeordnete Magnetometer 14 hat zwei in der Fahrebene des Fahrzeugs ausgerichtete, um 90° gegeneinander versetzte Sonden, welche die von ihnen gemessenen Komponenten des am Magnetometer 14 wirksamen Magnetfeldes in Form von elektrischen Meßwerten ausgibt, die zyklisch in der Auswerteschaltung zur Ermittlung der elliptischen Ortskurve des Magnetfeldes erfaßt und ausgewertet werden. Wie in der DE-OS 35 09 548 näher beschrieben, bildet dabei die Verschiebung des Mittelpunktes der elliptischen Ortskurve aus dem Koordinatenursprung einen richtungsunabhängigen Störfeldvektor $\vec{H}_c$ gemäß Figur 2. Dieser Störfeldvektor bildet den hartmagnetischen Teil der Störfelder im Kraftfahrzeug, der bei Änderungen durch Zu- oder Abschalten von Verbrauchern im Kraftfahrzeug relativ schnell nachgeführt werden soll. Die übrigen Parameter der elliptischen Ortskurve O aller vom Magnetometer 14 ausgegebenen und von der Auswerteschaltung erfaßten Meßwerte, d.h. die Drehung sowie die große und die kleine Halbachse der elliptischen Ortskurve O im Koordinatensystem x, y werden ebenfalls in bekannter Weise von dem Mikroprozessor 10 errechnet und im Datenspeicher 12 abgelegt.

Die dynamische Kompensation von Störfeldänderungen des hartmagnetischen Teiles im Kraftfahrzeug soll mit Hilfe der Figur 2 näher erläutert werden. Derartige Störfeldänderungen bewirken eine Verschiebung des Mittelpunktes M der Ortskurve O. Um eine solche Verschiebung zu erfassen und die Ortskurve O entsprechend nachzuführen, wird in der Auswerteschaltung zyklisch zu dem Vektor $\vec{v}_M$ des am Magnetometer 14 wirksamen Magnetfeldes zunächst der auf der elliptischen Ortskurve O ihm zugeordnete Sollvektor $\vec{v}_B$ ermittelt. Dann wird nun zusammen mit dem bisherigen hartmagnetisches Störfeldvektor $\vec{H}_H$ in bezug auf den magnetfeldvektor $\vec{v}_M$ als Störfeldänderung ein resultierender Vektor $\vec{v}_K$ gebildet nach der Gleichung:

$$\vec{v}_K = \vec{v}_M - \vec{v}_B - \vec{H}_H$$

Der so ermittelte resultierende Vektor $\overrightarrow{v_K}$ der Störfeldänderung wird nun mit einem Faktor k < 1, von beispielsweise k = 0,1 bei einer Zykluszeit von T = 100 ms gewichtet. Anschließend wird dann zum bisherigen hartmagnetischen Störfeldvektor $\overrightarrow{H_H}$ der gewichtete resultierende Vektor k x $\overrightarrow{v_K}$ hinzuaddiert, nach der

Gleichung: $\overrightarrow{H_{H'}} = \overrightarrow{H_{H\ alt}} + (K\ x\ \overrightarrow{v_K})$

Mit dem so ermittelten neuen hartmagnetischen Störfeldvektor $\overrightarrow{H_{H'}}$ wird nun die Richtung des Erdfeldes neu berechnet und zur Navigation des Fahrzeugs weiter verarbeitet.

Der Faktor k muß abhängig von der Zykluszeit für die Berechnung der Störfeldänderung gewählt werden, da bei unverändertem Faktor k mit zunehmender Zykluszeit die Nachführung bzw. Kompensation von Störfeldänderungen langsamer beläuft. Der Faktor k und die Zykluszeit sind im Ausführungsbeispiel so gewählt, daß kurzzeitig über wenige Sekunden auftretende Störfeldänderungen praktisch unterdrückt werden, dagegen Störfeldänderungen, die langzeitig über mehrere Minuten durch Zu- oder Abschalten von Verbrauchern im Kraftfahrzeug auftreten , durch den Faktor k voll nachgeführt bzw. kompensiert werden.

Mit der vorbeschriebenen Nacheichung sind jedoch die weichmagnetischen Störfeldänderungen nicht erfaßt, da diese von dem am Magnetometer wirksamen Magnetfeld richtungsabhängig sind und eine Änderung der Drehung und der Halbachsen der elliptischen Ortskurve O bewirken. Die Kompensation oder Nachführung solcher weichmagnetischer Störfeldänderungen wird daher mit einem weiteren, mit Hilfe der Figur 3 näher erläuterten Verfahren durchgeführt. Dazu wird ein Datenpuffer 12a im Datenspeicher 12 in eine bestimmte Anzahl von Plätzen, beispielsweise von 1 bis 24 aufgegliedert. Diese Plätze sind einer gleichen Anzahl von gleichgroßen Winkelsegmenten w1, w2 der elliptischen Ortskurve O nach Figur 2 zugeordnet. Die zyklisch erfaßten Meßwerte x des Magnetometers 14 werden an den ihren Winkelsegmenten w1, w2 ... entsprechenden Plätzen 1, 2 ... des Datenpuffers 12a abgelegt. Ist eine bestimmte Anzahl von Meßwerten x1, x2 ... im Datenpuffer 12a gespeichert, so werden aus diesen Meßwerten in bekannter Weise die Drehung und die Halbachsen als Parameter für die elliptische Ortskurve O neu errechnet Schließlich werden die bisherigen Parameter durch Mittelung mit den neu errechneten Parameterwerten korrigiert nach der Gleichung:

$P' = P_{alt} + k\ (P_{neu} - P_{alt})$     mit K<1; oder:

$P' = 1/2\ (P_{alt} + P_{neu})$     mit P' als korrigierter Parameterwert.

Anschließend werden die Meßwerte im Datenpuffer 12a gelöscht, so daß nunmehr wieder neue Meßwerte für eine weitere Nacheichung der Ortskurve O in den Speicher 12 eingelesen werden können.

Nach dem Ausführungsbeispiel ist vorgesehen, daß für jedes Winkelsegment w der elliptishen Ortskurve mindestens ein Meßwert im Datenpuffer 12a abgelegt sein muß, bevor eine neue Berechnung der Ortskurvenparameter erfolgen kann. Fallen mehrere Meßwerte für ein Winkelsegment an, so werden diese untereinander gemittelt und der Mittelwert m1, m2 wird im Datenpuffer 12a an dem entsprechenden Platz 1, 2 ... gespeichert. Auf diese Weise werden langsame Änderungen des Störfeldes, beispielsweise durch eine Ummagnetisierung im Fahrzeugblech des Kraftfahrzeugs erfaßt, die sich über Tage oder Wochen erstrecken. Auch standortbedingte Änderungen in der Intensität des zu messenden Erdfeldes werden durch dieses Verfahren langfristig nachgeführt. Eine schnellere Nachführung bzw. Kompensation von Störfeldänderungen ist beispielsweise dadurch möglich, daß zur neuen Berechnung der Ellipsenparameter lediglich einige Meßwerte für jeden Quadranten der elliptischen Ortskurve O im Datenpuffer 12 abgelegt sein müssen, um einen neuen Berechnungs- und Korrekturzyklus auszulösen.

Die dynamische Kompensation bzw. Nachführung der weichmagnetischen Störfeldänderungen gemäß Figur 3 erfolgt in der Auswerteschaltung des Navigationssystems unabhängig und parallel zu der dynamischen Kompensation bzw. Nachführung der hartmagnetischen Störfeldänderungen nach Figur 2 durch entsprechende Programmroutinen des Mikroprozessors 11.

## Patentansprüche

1. Verfahren zur Ermittlung der Richtung des Erdmagnetfeldes, der Nordrichtung bzw. der Fahrrichtung eines Fahrzeuges durch ein im Fahrzeug fest angeordnetes Magnetometer (14) und mit einer Auswerteschaltung, welche die vom Magnetometer (14) gemessenen Komponenten des dort wirksamen Magnetfeldes ($v_M$) als elektrische Meßwerte zyklisch erfaßt und zur Ermittlung der elliptischen Ortskurve (O) des Magnetfeldes, der Größe und Richtung von hartmagnetischen und weichmagnetischen Störfeldern als Parameter der elliptischen Ortskurve (O) sowie zur Berechnung der Richtung des Erdmagnetfeldes in bezug auf die Fahrrichtung auswertet, dadurch gekennzeichnet,

a) daß zur dynamischen Kompensation von sich zeitlich ändernden Störfeldern zyklisch zu dem Vektor des am Magnetometer (14) wirksamen Magnetfeldes ($v_M$) zunächst der auf der zuvor ermittelten elliptischen Ortskurve (O) ihm zugeordnete Sollvektor ($v_B$) ermittelt und zusammen mit dem bisherigen hartmagneti-schen Störfeldvektor $(\vec{H}_H)$ in bezug auf den Magnetfeldvektor $(\vec{v}_M)$ als Störfeldänderung ein resul-tierender Vektor $(\vec{v}_K)$ gebildet wird,

b) daß der resultierende Vektor $(\vec{v}_K)$ der Störfeldänderung mit einem Faktor (k < 1) gewichtet wird,

c) daß dann zum bisherigen hartmagnetischen Störfeldvektor $(\vec{H}_H)$ der gewichtete resultierende Vektor $(k \cdot \vec{v}_K)$ hinzuaddiert wird und

d) daß mit dem so ermittelten neuen hartmagnetischen Störfeldvektor $(\vec{H}_{H'})$ die Richtung des Erdmagnetfeldes berechnet wird.

2. Verfahren nach Anspruch 1, dadurch gekennzeichnet, daß der Faktor (k) abhängig von der Zykluszeit (T) der Meßwerterfassung so gewählt ist, daß kurzzeitig über wenige Sekunden auftretende Störfeldänderun-gen $(\vec{v}_K)$ nahezu unterdrückt werden.

3. Verfahren nach Anspruch 1 oder 2, dadurch gekennzeichnet, daß durch Zu- oder Abschalten von Verbrauchern im Kraftfahrzeug langfristig über mehrere Minuten auftretende Störfeldänderungen $(\vec{v}_K)$ durch den Faktor (k) voll nachgeführt werden.

4. Verfahren nach einem der vorhergehenden Ansprüche, dadurch gekennzeichnet, daß zur dynamischen Kompensation der weichmagnetischen Störfeldänderungen ein Datenpuffer (12a) in eine bestimmte Anzahl von Plätzen aufgegliedert wird, die einer gleich großen Anzahl von gleichgroßen Winkelsegmenten (w) der zuvor ermittelten elliptischen Ortskurve (O) zugeordnet werden und in die die zyklisch erfaßten Meßwerte (x) des Magnetometers (14) an den ihren Winkelsegmenten (w) entsprechenden Plätzen des Datenpuffers (12a) abgelegt werden, daß bei einer bestimmten Anzahl von Meßwerten (x) im Datenpuffer (12a) aus diesen die Parameter für die elliptische Ortskurve in bekannter Weise neu errechnet werden und daß die bisherigen Para-meter ($P_{alt}$) durch Mittelung mit den neu errechneten Parametern ($P_{neu}$) korrigiert werden.

5. Verfahren nach Anspruch 4, dadurch gekennzeichnet, daß zur neuen Berechnung der Parameter (P) mehrere Meßwerte (x) für jeden Quadranten der elliptischen Ortkurve (O) im Datenpuffer (12a) abgelegt sein müssen.

**Revendications**

1. Procédé pour déterminer la direction du champ magnétique terrestre, la direction du nord ou bien la direction de déplacement d'un véhicule grâce à un magnétomètre (14) disposé à poste fixe dans le véhicule, et avec un circuit d'exploitation qui reçoit cycliquement, sous la forme de valeurs électriques de mesure, les composantes mesurées par le magnétomètre (14) du champ magnétique ($V_M$) agissant à cet endroit et les exploite pour déterminer la courbe elliptique locale (O) du champ magnétique, la grandeur et la direction des champs parasites magnétiques durs et magnétiques mous en tant que paramètres de la courbe elliptique locale (O) ainsi que pour calculer la direction du champ magnétique terrestre par rapport à la direction de déplacement, procédé caractérisé en ce que :

a) pour la compensation dynamique de champs parasites se modifiant dans le temps, on détermine cycliquement par rapport au vecteur du champ magnétique ($V_M$) agissant sur le magnétomètre (14) tout d'abord le vecteur de consigne ($V_B$) qui lui est associé sur la courbe elliptique locale (O) préalablement déterminée, et avec le vecteur magnétique dur de champs parasites existant jusque là $(\vec{H}_H)$, on forme par rapport au vecteur du champ magnétique $(\vec{V}_M)$ en tant que modifications du champ parasite, un vecteur résul-tant $(\vec{V}_K)$,

b) ce vecteur résultant $(\vec{V}_K)$ de la modification du champ parasite, est pondéré avec un facteur (k < 1),

c) ensuite, le vecteur résultant ainsi pondéré (k . $\overrightarrow{V_K}$) est ajouté au vecteur magnétique dur du champ parasite ($\overrightarrow{H_H}$) existant jusqu'ici,

d) avec le nouveau vecteur magnétique dur de champs parasites ($\overrightarrow{H_H}$') ainsi déterminé on calcule la direction du champ magnétique terrestre.

2. Procédé selon la revendication 1, caractérisé en ce que le facteur (k) dépendant du temps de cycle (T) de la détection des valeurs de mesure, est choisi de façon que des modifications du champ parasite ($\overrightarrow{V_K}$) de courte durée s'étendant sur un petit nombre de secondes soient à peu près supprimées.

3. Procédé selon la revendication 1 ou la revendication 2, caractérisé en ce que des modifications du champ parasite ($\overrightarrow{V_K}$) de longue durée dues à la mise en circuit et hors circuit d'appareils utilisateurs dans le véhicule, et se prolongeant sur plusieurs minutes, sont complètement compensées par le facteur (k).

4. Procédé selon une des précédentes revendications, caractérisé en ce que pour la compensation dynamique des modifications magnétiques molles du champ parasite, un tampon de données (12a) est réparti en un nombre déterminé de places qui correspondent à un nombre identique de segments d'angle de même grandeur (w) de la courbe elliptique locale (O) préalablement déterminée, et dans lesquelles les valeurs de mesure (x) détectées cycliquement du magnétomètre (14) sont déposées aux places du tampon de données (12a) correspondant à leurs segments d'angle (w), en ce que pour un nombre déterminé de valeurs de mesure (x) dans le tampon de données (12a), les paramètres pour la courbe elliptique locale sont à nouveau calculés de façon connue à partir de ces valeurs de mesure, et en ce que les paramètres existants jusque là ($P_{ancien}$) sont corrigés en formant la moyenne avec les nouveaux paramètres calculés ($P_{nouveau}$).

5. Procédé selon la revendication 4, caractérisé en ce que pour le nouveau calcul des paramètres (P), plusieurs valeurs de mesure (x) doivent être déposées dans le tampon de données (12a) pour chaque cadran de la courbe elliptique locale (O).

## Claims

1. Method for determining the direction of the earth magnetic field, the north direction and the travelling direction of a vehicle by means of a magnetometer (14) mounted in the vehicle and by means of an evaluating circuit which cyclically acquires as electric measurement values and, for determining the elliptical locus curve (O) of the magnetic field, the magnitude and direction of hard-magnetic and soft-magnetic interfering fields as parameters of the elliptical locus curve (O) and for calculating the direction of the earth magnetic field with respect to the travelling direction, evaluates the components, measured by the magnetometer (14), of the magnetic field ($V_M$) effective at the magnetometer, characterised in that

a) for dynamically compensating interfering fields changing with time, the nominal vector ($V_B$), associated with the vector of the magnetic field ($V_M$) effective at the magnetometer (14), on the previously determined elliptical locus curve (O) is first cyclically determined and, together with the previous hard-magnetic interfering field vector ($\overrightarrow{H_H}$) with respect to the magnetic field vector ($\overrightarrow{V_M}$), a resultant vector ($\overrightarrow{V_K}$) is formed as interfering field change,

b) the resultant vector ($\overrightarrow{V_K}$) of the interfering field change is weighted with a factor (k < 1),

c) the weighted resultant vector (k . $\overrightarrow{V_K}$) is added to the previous hard-magnetic interfering field vector ($\overrightarrow{H_H}$), and

d) the direction of the earth magnetic field is calculated by means of the new hard-magnetic interfering field vector ($\overrightarrow{H_H}$') thus determined.

2. Method according to Claim 1, characterised in that the factor (k) is selected, in dependence on the cycle time (T) of the measurement value acquisition, in such a manner that interfering field changes ($\overrightarrow{V_K}$) occur-

ring for a short time over a few seconds are almost suppressed.

3. Method according to Claim 1 or 2, characterised in that interfering field changes $(\overrightarrow{v_k})$ occurring over a long time over several minutes due to connection or disconnection of loads in the motor vehicle are fully updated as a result of the factor (k).

4. Method according to any of the preceding claims, characterised in that, for dynamically compensating the soft-magnetic interfering field changes, a data buffer (12a) is divided into a particular number of spaces which are allocated to an equally large number of equally large angle segments (w) of the previously determined elliptical locus curve (O) and in which the cyclically acquired measurement values (x) of the magnetometer (14) are stored at the spaces of the data buffer (12a) corresponding to their angle segments (w), that, with a particular number of measurement values (x) in the data buffer (12a), the parameters for the elliptical locus curve are recalculated from these in known manner and that the previous parameters ($P_{old}$) are corrected by averaging with the recalculated parameters ($P_{new}$).

5. Method according to Claim 4, characterised in that several measurement values (x) for each quadrant of the elliptical locus curve (O) must be stored in the data buffer (12a) for the recalculation of the parameters (P).

# Fig. 1

# Fig. 3

# Fig. 2